# EUROPEAN PATENT APPLICATION

(11) **EP 3 435 331 A1**
(43) Date of publication of application: **30.01.2019**
(21) Application number: 17182915.3
(22) Date of filing: 25.07.2017
(51) Int. Cl.: G06T 7/246

(54) **ASSEMBLY AND METHOD FOR MANAGING A GOLF GAME**

(71) Applicant: Lorenzoni, Elio, 25081 Bedizzole (BS) (IT)
(72) Inventor: Lorenzoni, Elio, 25081 Bedizzole (BS) (IT)
(74) Representative: Trentin, Michele

(57) **Abstract**

A method for managing a golf game on a playing field (2) comprising a plurality of golf balls (3) provided with a marker for uniquely identifying them and one or more cameras (5) for tracing said golf balls (3) when hit by a user, said method comprising the following steps: tracking a first ball, when hit, by a camera; continuing to track the first ball in case of collision with a second ball. Prior to said step of continuing to track the first ball after said collision, there is a step of determining, by body motion physics formulations, which is the first ball and which is the second ball in case of collision between balls having coincident markers.

## Description

### Definitions

The term "teeing area" means the area from which the first shot of a golf hole is performed. This area is formally called "teeing ground".

The word "green" means that part of a golf course characterized by the carefully mown lawn to allow the rolling of the ball and inside which the hole where the player must direct the ball is situated.

### Field of application

The present invention is applicable to the sports play field of the golf game and finds a particular, but not exclusive, application in the golf training courses.

More in detail, the present invention relates to a method and assembly for the management of a golf game.

### State of the art

As is well known, golf courses are very extensive playing areas that cover hectares of land. These fields are divided into "holes" for each of which there is a starting area or teeing ground or teeing area, a hazards area, and a green where the hole is physically present.

Beacuse the extension, it is obvious that golf courses cannot be numerous so the users who accesses them are generally selected and limited. This excludes the average or inexperienced audience who may decide to try to approach the game of golf by playing some games with friends.

Even in the case of experienced players who simply want to train, the use of a golf course may be excessive.

Training fields, that is, golf courses of limited size suitable for trainings or games where players are always at the teeing area without having to move along the golf course, are thus known.

In these fields, the game involves directing the available balls to selected greens from the teeing area. The returned score corresponds to the final distance of the ball from the hole on the selected green.

As a result, a fundamental aspect of the game or training is to recognize, within the green, the ball hit by the specific user without confusing it with balls previously hit by the same user or other users. This is due to the fact that it is impractical to think that such balls are removed from the field immediately after the shot.

In this sense, ball-tracking systems such as those described in U.S. Pat. No. 5,798,519 are known, but they are particularly complex and may fail in the face of collisions with other balls or the like.

Specifically, as the system must provide for the presence of multiple users, the marker allows to distinguish a user from others.

However, balls having the same marker will likely collide. It is also known that tracking systems "have no memory", i.e. they cannot determine, in the case of a collision between two balls, which is one ball and which is the other, if not immediately distinguishable by the marker.

In other words, in the case of a collision between two balls having the coincident marker, the known systems do not allow to uniquely identify which is one ball and which is the other after the collision.

It is obvious that this represents a significant limitation because, in this situation, either the match is invalidated or the user who made the shot must repeat it, hoping to avoid further collisions with balls having the same marker.

Another possible solution would be to increase the differentiation between the balls so that they are uniquely identifiable. However, this possibility remains limited and forces a significant increase in the costs of the system, since very high definition cameras are required, the cost of which is high.

### Presentation of the invention

Object of the present invention is to at least partially overcome the drawbacks outlined above by providing an assembly and method for managing a golf game that may be applicable to any playing field, whether it is a normal or training field.

Another object is that the method and assembly allow the simultaneous playing of a large number of users.

A further object is that the assembly of the invention is of simple execution and of low cost.

Another object of the present invention is to provide a method and an assembly that will allow to distinguish between golf balls with the same marker that may collide.

Such aims, as well as others which will become clearer below, are achieved by a method and an assembly for managing a golf game according to the following claims, which are to be considered as an integral part of this patent.

In particular, the method is suitable for being implemented in a playing field comprising a plurality of golf balls provided with a marker for uniquely identifying them, and one or more cameras for tracing such golf balls when hit by a user.

According to an aspect of the invention, the method comprises a step of tracking a first ball, when hit by the user, by at least one of the cameras.

In the case of a collision of the first ball with a second ball already present in the playing area, there is then a step of continuing to track the first ball in case the two balls have markers different from one another.

However, in case the marker coincides, there is, first of all, a step of determining, based on body motion physics formulations, which is the first ball and which is the second ball, after which there is the step of continuing to track the first ball.

Advantageously, therefore, the method of the invention allows to always know in a simple and safe manner what is the first ball even in case of collision with balls having the same marker.

Still advantageously, the method allows to achieve this result while maintaining substantially unchanged operating costs. Specifically, it allows to uniquely identify balls without the need to use more expensive and high-definition cameras.

Indeed, advantageously, the method of the invention allows to uniquely identify the balls even in the case of collision between balls with identical markers.

It is equally evident that said objects are also achieved by an assembly for managing a golf game including:
- a playing field having one or more teeing areas for the first shot of a golf game and one or more greens on which the holes for the golf game are made;
- a plurality of golf balls equipped with markers to uniquely identify them;
- one or more cameras for tracking said balls,
and characterized in that it comprises at least one control unit operatively connected at least to said cameras for processing the images and uniquely identifying said balls, said control unit controlling said cameras so that they:
- continue to track a first of said balls in case of collision with a second of said balls having a different marker with respect to said first ball;
- determine which is said first ball and which is said second ball in case of collision between balls having coincident markers and continue to track said first ball.

### Brief description of the drawings

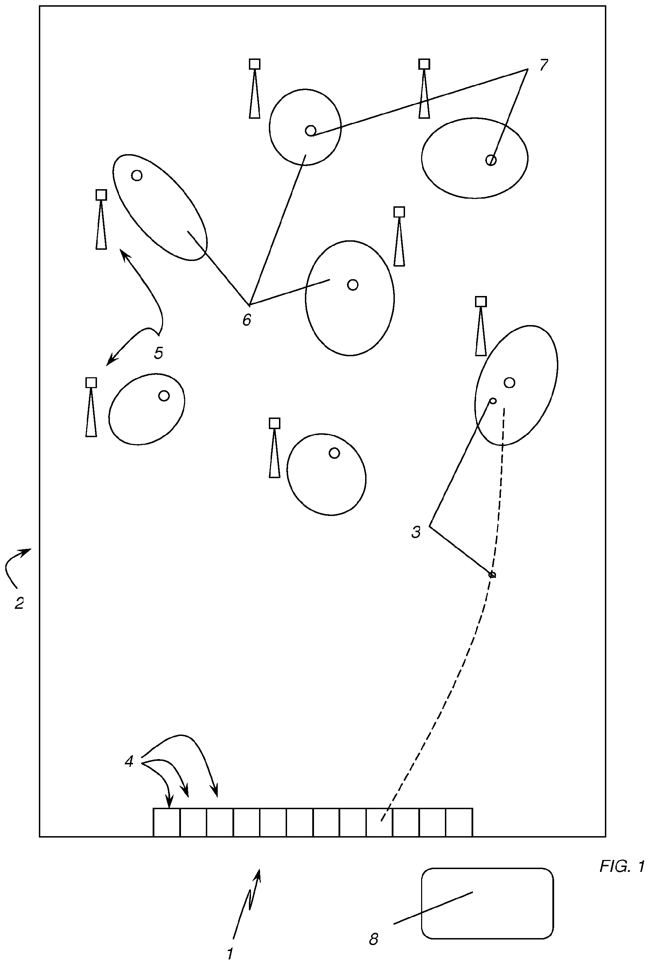

Further features and advantages of the invention will be more evident in the light of the detailed description of some preferred, but not exclusive, embodiments of an assembly and a method for managing a golf game according to the invention, illustrated by way of a non-limiting example with the aid of the accompanying drawing, wherein FIG. 1 represents an assembly according to the invention in a schematic view.

### Detailed description of a preferred embodiment example

With reference to the mentioned figures, and in particular to Fig. 1, described herein is a method for managing a golf game.

Such a method is typically applicable to a game that is played on a playing field **2** comprising a plurality of golf balls **3**, each provided with a suitable marker for uniquely identifying them.

From the figures, it is possible to see that the playing field is a training field. However, such feature should not be considered as limiting to the invention, the method of the invention being also applicable to regular-size playing fields.

According to the illustrated embodiment, the marker is constituted by the specific colouring of the balls **3**, but this should not be considered limiting for different embodiments.

In any case, the marker allows to distinguish between balls **3**, for example by associating them uniquely with a teeing area **4** of the playing field **2** or with a respective user.

In order to track the balls hit by a user, the playing field **2** also includes a plurality of cameras **5.** In particular, each camera **5** is associated with a respective green **6**, but such detail should not be considered as limiting for the invention. Specifically, the number of cameras **5** is any, being such a feature irrelevant to the invention. What matters is, however, that they have a sufficient definition for marker recognition. In the example of execution of the invention being described, this definition is six pixels per ball.

According to an aspect of the invention, the method comprises a tracking step of a first ball that has just been hit by a user who tries to direct it to a green **6** of his choice. This tracking takes place with one of the available cameras **5.**

In the case that the first ball collides with a second ball, the method of the invention contemplates that, in any case, the tracking of at least the first ball is continued.

However, according to another aspect of the invention, the method provides, prior to this continuation of tracking of the first ball, a phase of determining which is the first ball and which is the second ball. In case the collision occurs between balls with different markers, such determination is immediately apparent by the markers themselves.

On the other hand, in the case of collisions between balls having coincident markers, this determination is made using mathematical formulations derived from body motion physics. In particular, this step involves calculating the theoretical trajectory that the two balls should hit in collision and, with the support of such theoretical trajectories, determines in reality which is the first ball and which is the second.

Advantageously, therefore, the method of the invention allows to always and uniquely identify the ball **3** just hit by the user on the playing field **2** even in case of collision with other balls **3** having the same marker.

Such identification, however, is of safe and simple execution, being achieved by applying mathematical formulas.

For this reason, still advantageously, the method allows to achieve this result while maintaining substantially unchanged operating costs. Specifically, it allows to uniquely identify balls **3** without the need to use more expensive and high-definition cameras **5.**

According to another aspect of the invention, thereafter there is also a tracking step of the second ball after the collision with the first one, since such information may be of relevance for the purpose of the game.

As far as the marker is concerned, in the described embodiment, it consists of the colour of the balls **3.** In particular, each colour of the balls **3** is uniquely associated with a respective teeing area **4** and/or a respective user.

However, this should not be considered as limiting for the invention. For example, a practice field can be used for golf matches between groups of people. In this case, each teeing area can be dedicated to a specific group with balls all of the same colour. Users can be distinguished by referring to the hitting order. The other teeing areas can be dedicated to distinct groups which will be supplied with balls of different colour from those of the other teeing areas.

According to another possible application, each user in the same group has balls of the same colour and of different colour from the group users.

From the above-mentioned examples, it is evident, therefore, that the applications may be multiple and, consequently, they should not be considered limiting for the invention.

As mentioned above, the object of the invention is also an assembly 1 for managing a golf game.

The assembly **1** comprises a playing field **2** having one or more teeing areas **4** for performing the first shot of a golf game and one or more greens **6** on which the holes **7** for the golf game are made.

For the execution of games or game simulations, there is also a plurality of golf balls **3** all equipped with a marker for uniquely identifying them. In the example case, the marker, as said, consists of the colour of the balls.

The assembly **1** then comprises a plurality of cameras **5** each suitable for tracking the balls **3** destined to the respective green **6.**

As said, the number of cameras **5** can be any, and the number of cameras **5** for each green **6** can be any, since this detail is irrelevant for the purpose of the invention. In the most general case, there is only one camera capable of framing all greens at the same time, typically with a fixed framing, while in the case.

What matters is, of course, that the cameras **5** have technical features such as to allow the recognition of the markers of the balls **3.**

According to an aspect of the invention, the assembly **1** also includes a control unit **8** operatively connected to the cameras **5** and adapted to process the images resulting from them in order to uniquely identify the balls **3.**

Typically, the control unit is an electronic processor, but also this aspect should not be considered limiting for the invention.

According to an aspect of the invention, the control unit **8** properly controls the cameras even in the case of collisions between balls **3** having the same marker.

In detail, the control unit **8** keeps tracking a first ball in case of collision with a second ball if the two have different markers.

In case, however, the two balls **3** have coincident markers, the control unit **8** first determines which are the first and second balls, and then continues to trace the first. This determination takes place by means of the prediction of the direction that the two balls **3** will take as a result of the collision using the body motion physics theory.

In other words, the control unit **8** controls the cameras **5** so that they always track the first ball safely. In the case of collisions between balls with different markers, the recognition of the first ball is obvious. In the case of coincident markers, however, the control unit **8** calculates which trajectories the two balls **3** should take using the body motion physics theory and, after these calculations, can determine which of the two balls **3** is the first and which is the second.

However, it is evident that the method and assembly for managing a golf game of the invention reach all set goals.

Specifically, the method and assembly of the invention are applicable to training and normal golf fields, although it is particularly effective when applied to the first ones.

In any case, the method and assembly of the invention allow and facilitate the simultaneous play of a large number of users, while maintaining ease of execution and low costs compared to known equivalent assemblies.

More specifically, the assembly and method of the invention allow to safely distinguish between golf balls having the same marker in case they might collide.

The invention may be subject to many changes and variations, which are all included in the appended claims. Moreover, all the details may furthermore be replaced by other technically equivalent elements, and materials may be different depending on the needs, without departing from the scope of protection of the invention defined by the appended claims.

## Claims

1. A method for managing a golf game on a playing field (**2**) comprising a plurality of golf balls (**3**) provided with a marker for uniquely identifying them and one or more cameras (**5**) for tracing said golf balls (**3**) when hit by a user, said method comprising the following steps:
- tracking a first one of said balls (**3**) when hit by at least one of said cameras (**5**);
- continuing to track said first ball in case of collision with a second one of said balls (**3**),
**characterized in** comprising, prior to said step of continuing to track said first ball after said collision, a step of determining, by body motion physics formulations, which is said first ball and which is said second ball in case of collision between balls (**3**) having coincident markers.

2. Method according to claim 1 or 2, **characterized in** comprising a tracking step of said second ball after said collision with said first ball.

3. Method according to any one of the preceding claims, **characterized in that** said marker is the colour of said balls (**3**).

4. Method according to claim 3, **characterized in that** each colour of said balls (**3**) is uniquely associated with a respective teeing area (**4**) and/or a respective user.

5. Method according to any one of the preceding claims, **characterized in that** said cameras (**5**) are arranged at least in the vicinity of a green (**6**).

6. Method according to any one of the preceding claims, **characterized in that** said cameras (**5**) have a definition of at least 6 pixels.

7. An assembly for managing a golf game comprising:
- a playing field (**2**) having one or more teeing areas (**4**) for performing the first shot of a golf game and one or more greens (**6**) on which the holes (**7**) for the golf game are made;
- a plurality of golf balls (**3**) equipped with markers to uniquely identify them;
- one or more cameras (**5**) for tracking said balls (**3**),
**characterized in** comprising at least one control unit (**8**) operatively connected at least to said cameras (**5**) for processing the images and uniquely identifying said balls (**3**), said control unit (**8**) controlling said cameras (**5**) so that they:
- continue to track a first of said balls (**3**) in case of collision with a second of said balls (**3**) having a different marker with respect to said first ball;
- determine which is said first ball and which is said second ball by body motion physics formulations in case of collision between balls (**3**) having coincident markers and continue to track said first ball.
